(19) Europäisches Patentamt
European Patent Office
Office européen des brevets

(11) **EP 1 154 368 B1**

(12) **FASCICULE DE BREVET EUROPEEN**

(45) Date de publication et mention
de la délivrance du brevet:
**13.12.2006 Bulletin 2006/50**

(51) Int Cl.:
***G06K 7/00*** (2006.01)

(21) Numéro de dépôt: **01410053.1**

(22) Date de dépôt: **11.05.2001**

(54) **Lecteur avec une évaluation du nombre de transpondeurs électromagnétiques dans le champ du lecteur**

Lesegerät mit Mitteln zur Bestimmung der Anzahl von elektromagnetischen Transpondern im Felde des Lesegerätes

Reader having means for determining the number of electromagnetic transponders in the field of the reader

(84) Etats contractants désignés:
**DE FR GB IT**

(30) Priorité: **12.05.2000 FR 0006065**

(43) Date de publication de la demande:
**14.11.2001 Bulletin 2001/46**

(73) Titulaire: **STMicroelectronics S.A.**
**92120 Montrouge (FR)**

(72) Inventeur: **Wuidart, Luc**
**83910 Pourrières (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 722 094          EP-A- 0 857 981**
**WO-A-99/43096**

**Description**

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou écriture. Généralement, les transpondeurs extraient l'alimentation nécessaire aux circuits électroniques qu'ils comportent d'un champ haute fréquence rayonné par une antenne de la borne de lecture et d'écriture.

La présente invention concerne plus particulièrement les systèmes dans lesquels plusieurs transpondeurs sont susceptibles de recevoir, en même temps, le champ rayonné par une même borne de lecture. Il s'agit, en particulier, des lecteurs de transpondeurs ne disposant pas de moyens pour isoler un transpondeur, par exemple, par l'introduction de ce dernier dans une fente ou analogue.

Dans de tels systèmes, le lecteur doit être capable de déterminer, de façon exhaustive, le nombre de transpondeurs présents dans son champ ainsi que, selon les applications, le nombre de transpondeurs avec lesquels il doit communiquer simultanément.

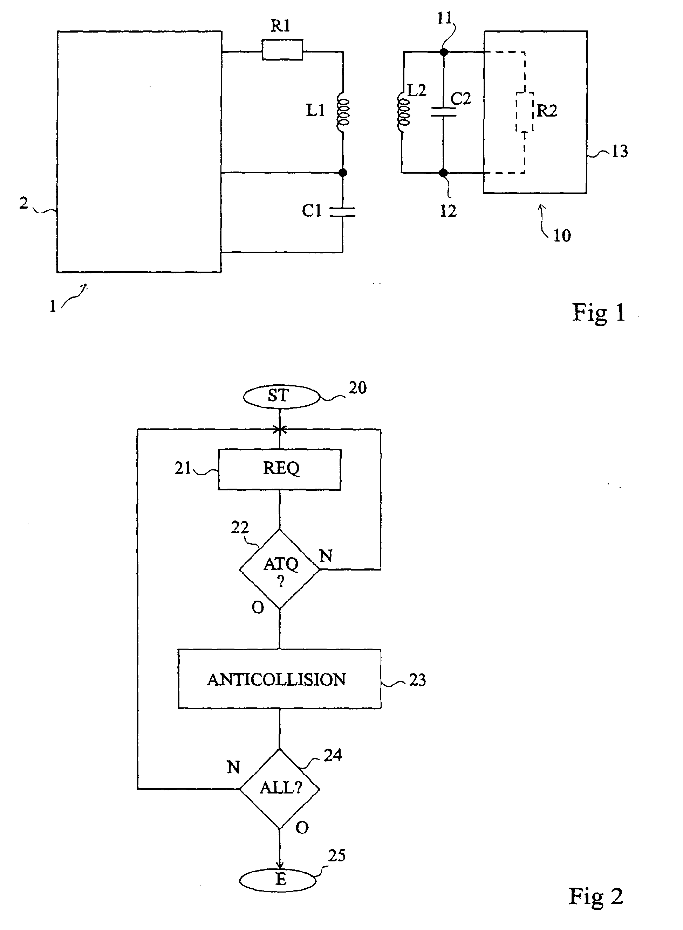

La figure 1 représente, de façon très schématique et simplifiée, un exemple classique de système d'échange de données entre une borne 1 de lecture-écriture et un transpondeur 10 du type auquel s'applique la présente invention.

Généralement, la borne 1 est essentiellement constituée d'un circuit oscillant série, formé d'une inductance L1 en série avec un condensateur C1 et une résistance R1. Ce circuit oscillant série est commandé par un dispositif 2 comprenant, entre autres et de façon non limitative, un amplificateur ou coupleur d'antenne, un circuit de commande et d'exploitation des données reçues pourvu notamment d'un modulateur/démodulateur et d'un microprocesseur de traitement des commandes et des données. Le circuit 2 communique généralement avec différents circuits d'entrée/sortie (clavier, écran, moyen d'échange avec un serveur, etc.) et/ou de traitement non représentés. Les circuits de la borne de lecture-écriture tirent l'énergie nécessaire à leur fonctionnement d'un circuit d'alimentation (non représenté) raccordé, par exemple, au réseau de distribution électrique.

Un transpondeur 10, destiné à coopérer avec une borne 1, comporte essentiellement un circuit oscillant parallèle formé d'une inductance L2 en parallèle avec un condensateur C2 entre deux bornes 11, 12 d'entrée d'un circuit 13 de commande et de traitement. Les bornes 11 et 12 sont, en pratique, reliées à l'entrée d'un moyen de redressement (non représenté) dont les sorties constituent des bornes d'alimentation continue des circuits internes au transpondeur. Ces circuits comprennent généralement, essentiellement, un microprocesseur, une mémoire, un démodulateur des signaux éventuellement reçus de la borne 1, et un modulateur pour transmettre des informations à la borne.

Les circuits oscillants de la borne et du transpondeur sont généralement accordés sur une même fréquence correspondant à la fréquence d'un signal d'excitation du circuit oscillant de la borne. Ce signal haute fréquence (par exemple, 13,56 MHz) sert non seulement de porteuse de transmission de données de la borne vers le transpondeur mais également de porteuse de téléalimentation à destination des transpondeurs se trouvant dans le champ de la borne. Quand un transpondeur 10 se trouve dans le champ d'une borne 1, une tension haute fréquence est engendrée aux bornes 11 et 12 du circuit résonnant du transpondeur. Cette tension, après redressement et écrêtement éventuel, est destinée à fournir la tension d'alimentation des circuits électroniques 13 du transpondeur.

La porteuse haute fréquence émise par la borne est généralement modulée en amplitude par celle-ci selon différentes techniques de codage afin de transmettre des données et/ou des commandes à un ou plusieurs transpondeurs dans le champ. En retour, la transmission de données du transpondeur vers une borne s'effectue généralement en modulant la charge constituée par le circuit résonnant L2, C2. Cette variation de charge s'effectue au rythme d'une sous-porteuse de fréquence (par exemple, 847,5 kHz) inférieure à celle de la porteuse. Cette variation de charge peut alors être détectée par la borne sous la forme d'une variation d'amplitude ou d'une variation de phase au moyen, par exemple, d'une mesure de la tension aux bornes du condensateur C1 ou du courant dans le circuit oscillant.

Lorsqu'elle est au repos, c'est-à-dire lorsque aucun transpondeur n'est dans son champ, une borne 1 émet périodiquement un message de données en modulation sur le signal haute fréquence. Ce message est un message d'interrogation à destination de transpondeurs éventuels. Cette interrogation, ou appel général, fait partie d'un processus indispensable à l'initialisation d'une communication entre un transpondeur et une borne.

Une difficulté dans l'établissement d'une communication vers un ou plusieurs transpondeurs est liée au fait que plusieurs transpondeurs électromagnétiques peuvent se trouver simultanément dans le champ de la borne. Cette dernière doit donc être capable de déterminer, non seulement le nombre de transpondeurs présents dans son champ, mais également ceux des transpondeurs qui correspondent à l'application à laquelle elle est destinée et avec lesquels elle doit communiquer.

Cette contrainte impose un fonctionnement en boucle d'un programme de commande de la borne jusqu'à ce que tous les transpondeurs présents dans son champ aient été correctement identifiés.

La figure 2 représente, de façon très schématique et simplifiée, un organigramme d'initialisation d'une ou plusieurs communications par une borne de lecture-écriture du type auquel s'applique la présente invention.

Dès qu'elle est mise sous tension et en fonctionnement, une borne 1 de lecture-écriture de transpondeurs débute (bloc 20, ST), après une phase d'allumage, d'initialisation et de test, une procédure de veille pendant laquelle elle attend l'établissement d'une communication avec au moins un transpondeur. Cette procédure consiste, essentiellement, à envoyer (bloc 21) périodiquement une séquence d'interrogation (REQ) à destination des transpondeurs éventuels présents dans le champ de la borne. Après chaque envoi de requête d'interrogation 21, le lecteur surveille (bloc 22) la réception par son démodulateur d'un message de réponse (ATQ) provenant d'un transpondeur entré dans son champ. En absence de réponse, le lecteur se met en boucle sur l'envoi d'une interrogation 21. Lorsqu'il reçoit une réponse ATQ, il passe alors dans un mode de vérification que le transpondeur est bien un transpondeur qui lui est destiné ainsi que dans un mode éventuel d'anti-collision (bloc 23) pour individualiser les transpondeurs dans son champ. En effet, en réponse à une requête d'interrogation par une borne, si plusieurs transpondeurs sont présents dans le champ de celle-ci, ils peuvent répondre en même temps ou avec un décalage temporel suffisamment faible pour rendre le résultat de la démodulation par le lecteur inexploitable. Celui-ci doit alors soit sélectionner un transpondeur avec lequel il veut communiquer, soit attribuer différents canaux aux différents transpondeurs.

Une communication ne débute que quand le processus d'initialisation et d'anti-collision illustré par la figure 2 est terminé (bloc 25, E), c'est-à-dire quand le lecteur a détecté (bloc 24) qu'il a identifié tous les transpondeurs présents dans son champ. Tant que tous les transpondeurs n'ont pas été identifiés, il recommence l'envoi de requêtes d'interrogation. Si un transpondeur a été correctement identifié, celui-ci est placé dans un état où il ne répond plus à ces requêtes d'interrogation pour ne pas polluer la détection des autres transpondeurs éventuels.

Un processus d'initialisation et d'anti-collision tel que décrit brièvement en relation avec la figure 2 est parfaitement connu. On trouve, par exemple, des illustrations de procédés classiques dans les demandes de brevet français N° 2760280 et 2773627.

La mise en oeuvre du procédé illustré par la figure 2 s'effectue le plus souvent en fixant un nombre maximal de cartes susceptibles d'être dans le champ du lecteur. Comme cela a été décrit, en particulier dans la demande de brevet français N° 2760280, ce nombre peut être modifié, par le lecteur, en fonction des résultats d'exploitation du procédé d'anti-collision (bloc 23) afin d'augmenter les probabilités de détection et de réduire la durée du procédé d'initialisation.

En effet, la durée précédant l'établissement d'une communication entre une borne de lecture-écriture et un ou plusieurs transpondeurs constitue un paramètre critique dans l'utilisation de ces systèmes à transpondeur. Un transpondeur est souvent constitué d'un badge ou d'une carte sans contact manipulé par un utilisateur. Si celui-ci n'obtient pas une communication quasi-immédiate avec le lecteur (ou tout du moins imperceptible pour lui), il va avoir tendance à modifier la position de sa carte ou à croire que le système ne fonctionne pas. On considère qu'au-delà d'une période de 100 millisecondes, la durée d'établissement d'une communication pour un fonctionnement fiable avec un transpondeur est trop élevée.

Or, comme cela a été exposé ci-dessus, cette durée dépend du nombre de boucles de reconnaissance que doit effectuer le lecteur avant l'établissement de la communication pour déterminer le nombre de transpondeurs présents dans son champ. Ce nombre de boucles est essentiellement fonction du nombre de transpondeurs que l'on doit isoler.

Aujourd'hui, ce nombre ne peut être déterminé qu'en mettant en oeuvre des calculs statistiques et des algorithmes de probabilité tendant à minimiser le nombre de boucles au fur-et-à-mesure de la détection des transpondeurs.

La présente invention vise à réduire le temps nécessaire à l'initialisation et l'établissement de communications entre une borne de lecture-écriture de transpondeurs électromagnétiques et un ou plusieurs transpondeurs entrés dans son champ, c'est-à-dire à réduire la durée nécessaire à la détermination, et à l'identification, par la borne de lecture-écriture, de tous les transpondeurs présents à un instant donné dans son champ.

La présente invention vise plus particulièrement à proposer une solution qui permette de réduire le nombre de boucles d'interrogation effectuées par la borne.

L'invention vise également à optimiser l'adaptation dynamique du nombre de transpondeurs à détecter pris en compte dans des procédés d'anti-collision classiques.

L'invention vise en outre à proposer une solution qui ne nécessite pas l'utilisation des résultats de détection du démodulateur de la borne.

Pour atteindre ces objets, la présente invention prévoit une borne de génération d'un champ électromagnétique haute fréquence au moyen d'un circuit oscillant, propre à coopérer avec au moins un transpondeur lorsque ce dernier entre dans ce champ, et comportant des moyens de régulation de la phase du signal dans le circuit oscillant par rapport à une valeur de référence et des moyens pour évaluer, à partir d'une mesure du courant dans le circuit oscillant, le nombre minimal de transpondeurs présents dans le champ.

Selon un mode de réalisation de la présente invention, la borne comporte en outre des moyens pour, à partir d'une mesure de la tension aux bornes d'un élément capacitif du circuit oscillant, évaluer le nombre maximal de transpondeurs présents dans le champ de la borne.

Selon un mode de réalisation de la présente invention, la borne comporte des moyens pour déterminer et mémoriser des informations caractéristiques relatives aux tensions aux bornes de l'élément capacitif de son circuit oscillant et aux courants dans ce circuit oscillant, dans plusieurs configurations déterminées de distance séparant un ou plusieurs transpondeurs de la borne, et pour tenir compte de ces informations caractéristiques dans l'évaluation du nombre de transpondeurs.

Selon un mode de réalisation de la présente invention, lesdites informations caractéristiques comprennent, entre autres, la tension aux bornes de l'élément capacitif lorsque aucun transpondeur n'est présent dans le champ de la borne, la tension aux bornes de l'élément capacitif lorsqu'un transpondeur est dans une relation de proximité maximale avec la borne, le courant dans le circuit oscillant quand aucun transpondeur n'est présent dans le champ de la borne, et le courant dans le circuit oscillant quand un transpondeur est dans une relation de proximité maximale avec la borne.

Selon un mode de réalisation de la présente invention, l'évaluation du nombre de cartes s'effectue sans interpréter de messages de données éventuels véhiculés par le champ haute fréquence.

L'invention prévoit également un procédé d'établissement d'au moins une communication entre une borne de génération d'un champ magnétique haute fréquence et un transpondeur électromagnétique, consistant à envoyer périodiquement une séquence d'interrogation jusqu'à ce qu'au moins un transpondeur entrant dans le champ réponde, et à évaluer, à partir d'une mesure du courant dans un circuit oscillant de la borne, un nombre minimal de transpondeurs susceptibles d'être présents dans le champ.

Selon un mode de réalisation de la présente invention, ladite évaluation consiste à comparer le courant mesuré à des valeurs précédemment calculées et mémorisées et correspondant à des évaluations du courant maximal pour plusieurs nombres minimum de transpondeurs.

Selon un mode de réalisation de la présente invention, le procédé consiste en outre, à partir de l'évaluation du nombre minimal et d'une mesure de la tension courante aux bornes d'un élément capacitif du circuit oscillant, à évaluer un nombre maximum de transpondeurs susceptibles d'être présents dans le champ de la borne.

Ces objets, caractéristiques et avantages, ainsi que d'autres de la présente invention seront exposés en détail dans la description suivante de modes de réalisation et de mise en oeuvre particuliers faite à titre non-limitatif en relation avec les figures jointes parmi lesquelles :

les figures 1 et 2 qui ont été décrites précédemment sont destinées à exposer l'état de la technique et le problème posé ;

la figure 3 représente, sous forme de blocs, un mode de réalisation d'une borne de lecture-écriture de transpondeurs électromagnétiques selon la présente invention ;

la figure 4 représente des caractéristiques d'évolution du courant dans le circuit oscillant d'une borne de l'invention par rapport à la distance à laquelle se trouve un ou plusieurs transpondeurs, pour illustrer une phase d'apprentissage du procédé d'évaluation du nombre de transpondeurs selon la présente invention ;

la figure 5 est un organigramme simplifié illustrant un mode de mise en oeuvre d'une phase d'apprentissage du procédé d'évaluation du nombre de transpondeurs selon la présente invention ;

la figure 6 est un organigramme illustrant, de façon simplifiée, un premier mode de mise en oeuvre du procédé de détermination du nombre de transpondeurs dans le champ d'une borne selon l'invention ;

la figure 7 est un organigramme simplifié d'un deuxième mode de mise en oeuvre du procédé de détermination du nombre de transpondeurs dans le champ d'une borne selon la présente invention ; et

la figure 8 représente une caractéristique du courant dans le circuit oscillant de la borne en fonction du coefficient de couplage, et une caractéristique de la tension aux bornes du condensateur de ce circuit oscillant, pour illustrer le deuxième mode de mise en oeuvre du procédé de l'invention.

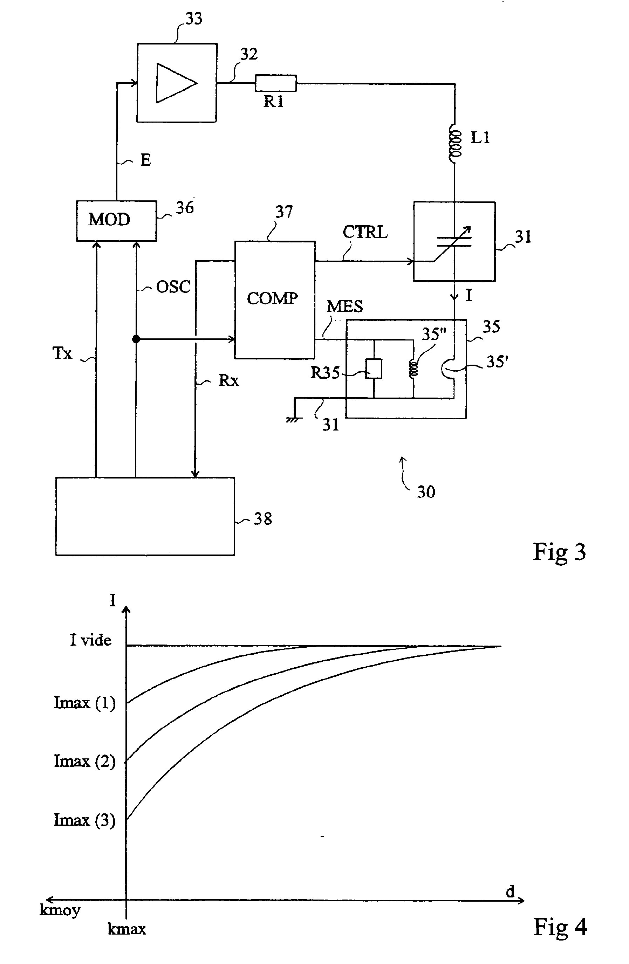

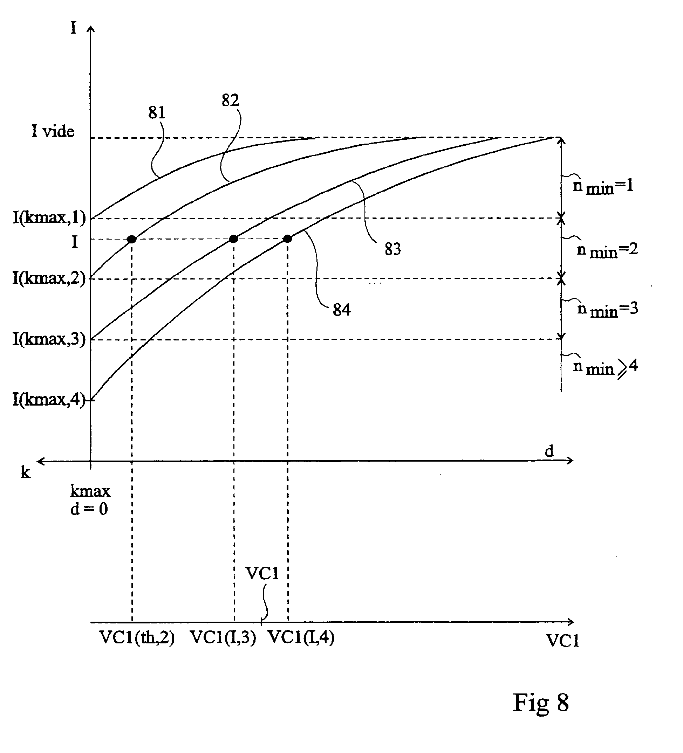

Les mêmes éléments ont été désignés par les mêmes références aux différentes figures. Pour des raisons de clarté, les caractéristiques des figures 4 et 8 ont été tracées sans respect d'échelle et seuls les éléments d'une borne ou d'un transpondeur et les étapes de procédés qui sont nécessaires à la compréhension de la présente invention ont été représentés aux figures et seront décrits par la suite. En particulier, les moyens utilisés pour mettre en oeuvre les calculs dans le procédé de l'invention n'ont pas été détaillés pour être parfaitement classiques. Il s'agira, par exemple, du microprocesseur dont est généralement pourvue une borne de lecture-écriture. En outre, on fera souvent référence à des "cartes" pour désigner les transpondeurs, mais on notera que l'invention s'applique quel que soit le type de transpondeur qu'il soit ou non pourvu d'un microprocesseur (carte de type carte de crédit, étiquette électronique, etc.).

Une caractéristique de la présente invention est de prévoir une évaluation du nombre de cartes présentes dans le champ d'une borne de lecture-écriture à partir de mesures physiques effectuées sur le circuit oscillant de la borne. Plus précisément, selon la présente invention, on évalue le nombre de cartes dans le champ de la borne en comparant les valeurs du courant dans le circuit oscillant de la borne et la tension aux bornes du condensateur de ce circuit oscillant, par rapport à des valeurs mesurées et/ou calculées dans une phase d'apprentissage précédant la mise en fonctionnement de la borne.

L'évaluation de ce nombre de transpondeurs permet de réduire considérablement le nombre de boucles du procédé d'initialisation de communication ou d'anti-collision (figure 2). En effet, même si on utilise un procédé adaptant dynamiquement le nombre à partir des mesures, le nombre initial pris en compte est affiné par rapport à une mise en oeuvre classique. Selon la présente invention, l'évaluation du nombre de cartes s'effectue (en amont du démodulateur) sans nécessiter l'exploitation du signal de données reçues (c'est-à-dire en aval du démodulateur de la borne). L'invention prévoit d'évaluer ce nombre à partir des seules déterminations électriques de courant et de tension et de calculs de ces grandeurs.

Pour disposer de l'information relative au nombre de transpondeurs ou cartes, on pourrait penser qu'il suffit de mesurer la variation de charge constituée par une augmentation du nombre de transpondeurs dans le champ de la borne sur le circuit oscillant de celle-ci. Toutefois, une telle mesure est en pratique inexploitable, car une telle variation n'est pas linéaire en fonction du nombre de cartes présentes dans le champ. De plus, la charge constituée par un transpondeur sur le circuit oscillant dépend de la distance séparant ce transpondeur de la borne. Or, la plage de variation, évaluée aux bornes du condensateur du circuit oscillant de la borne (condensateur C1, figure 1), dépend de l'accord de ce circuit oscillant ainsi que de l'accord du circuit oscillant du transpondeur sur la fréquence de la porteuse de téléalimentation. Or, dans les circuits classiques, l'accord n'est pas parfait.

En particulier, dans la plupart des bornes classiques, l'accord de la fréquence de résonance à la fréquence de la porteuse est effectué manuellement au moyen d'un condensateur variable, une fois la borne fabriquée. On a besoin d'ajuster l'accord, notamment, en raison des tolérances de fabrication des éléments capacitifs et inductifs, pour garantir le point de fonctionnement en phase choisi entre un signal de référence délivré par un oscillateur de la borne et le signal reçu, prélevé par exemple aux bornes du condensateur C1. Un désaccord du circuit oscillant de la borne a plusieurs conséquences et, en particulier, celle de modifier l'amplitude du signal dans ce circuit oscillant et, par voie de conséquence, l'amplitude disponible du signal pour une évaluation éventuelle.

Ainsi, une autre caractéristique de la présente invention est de prévoir une régulation de la phase du circuit oscillant de la borne par rapport à une valeur de référence. Selon l'invention, cette régulation de phase est effectuée au moyen d'une boucle dont le temps de réponse est choisi pour que la boucle soit suffisamment lente afin de ne pas gêner la rétromodulation éventuelle provenant d'un transpondeur, et soit suffisamment rapide devant la vitesse de passage d'un transpondeur dans le champ de la borne. On peut parler de régulation statique par rapport aux fréquences de modulation (par exemple, la fréquence de la porteuse de téléalimentation de 13,56 MHz, et la fréquence de rétromodulation de 847,5 kHz utilisée dans la transmission de données du transpondeur vers la borne).

La figure 3 représente, sous forme de blocs, un mode de réalisation d'une borne 30 selon l'invention, équipée d'une boucle de régulation de phase du circuit oscillant.

De façon classique, la borne 30 comporte un circuit oscillant formé d'une inductance ou antenne L1, en série avec un élément capacitif 31 et un élément résistif R1, entre une borne 32 de sortie d'un amplificateur ou coupleur d'antenne 33 et une borne 34 à un potentiel de référence (généralement, la masse). Un élément 35 de mesure du courant dans le circuit oscillant est intercalé, par exemple, entre l'élément capacitif 31 et la masse 34. Cet élément de mesure 35 fait partie de la boucle de régulation de phase qui sera décrite ci-après. L'amplificateur 33 reçoit un signal E de transmission haute fréquence, issu d'un modulateur 36 (MOD) qui reçoit une fréquence de référence (signal OSC) par exemple, d'un oscillateur à quartz (non représenté). Le modulateur 36 reçoit, si besoin, un signal Tx de données à transmettre et, en l'absence de transmission de données depuis la borne, délivre la porteuse haute fréquence (par exemple, à 13,56 MHz) propre à téléalimenter un transpondeur. L'élément capacitif 31 est un élément à capacité variable et commandable par un signal CTRL.

Dans la borne 30, on réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. Cette régulation est effectuée en faisant varier la capacité du circuit oscillant de la borne 30 de façon à maintenir le courant dans l'antenne en relation de phase constante avec le signal de référence qui correspond, par exemple, au signal OSC fourni par l'oscillateur du modulateur. Le signal CTRL est issu d'un circuit 37 (COMP) dont le rôle est de détecter l'écart de phase par rapport au signal de référence et de modifier en conséquence la capacité de l'élément 31. La mesure de phase est effectuée, par exemple, à partir d'une mesure du courant I dans le circuit au moyen d'un transformateur d'intensité 35 monté en série avec l'élément 31. Ce transformateur est généralement constitué d'un enroulement primaire 35' entre l'élément 31 et la borne 34 de masse, et d'un enroulement secondaire 35" dont une première borne est connectée directement à la masse 34 et dont l'autre borne délivre un signal MES fournissant le résultat de la mesure, une résistance R35 de conversion courant-tension étant connectée en parallèle avec l'enroulement secondaire 35". Le résultat de la mesure MES est envoyé au comparateur 37 qui asservit en conséquence l'élément capacitif 31 au moyen du signal CTRL.

Selon un mode de réalisation préféré tel qu'illustré par la figure 3, le comparateur 37 utilise le même démodulateur de phase (non représenté) que celui qui sert à démoduler le signal provenant du transpondeur et que reçoit éventuellement le circuit oscillant. Par conséquent, comme l'illustre la figure 3, le comparateur 37 délivre un signal Rx restituant une rétromodulation éventuelle de données reçues d'un transpondeur à un bloc 38 symbolisant le reste des circuits électroniques de la borne.

La réalisation pratique de la boucle de régulation de phase est à la portée de l'homme du métier en recourant à des moyens classiques et à partir des indications fonctionnelles données ci-dessus. En variante au transformateur d'intensité de la figure 3, on pourra utiliser d'autres moyens classiques. Un exemple de borne à régulation de phase est décrit dans le document EP-A-0857981.

En régulant la phase du circuit oscillant de la borne sur une valeur de référence, on s'affranchit non seulement des problèmes éventuels des tolérances de dimensionnement des composants des circuits oscillants et de la dérive de ces composants en fonctionnement, mais on permet de plus d'effectuer des mesures fiables relatives au couplage magnétique entre le circuit oscillant de la borne et celui d'un ou plusieurs transpondeurs.

Grâce au recours à une boucle de régulation de phase, on peut désormais exploiter des mesures de courant et de tension dans le circuit oscillant de la borne pour en déduire, selon l'invention, des informations relatives au nombre de transpondeurs ou cartes présentes dans le champ. Ces informations prennent en compte, notamment, le couplage entre chacune des cartes et la borne, c'est-à-dire le coefficient de couplage entre deux circuits oscillants interagissants. Ce coefficient de couplage dépend essentiellement de la distance séparant le transpondeur de la borne. On notera que le coefficient de couplage entre les circuits oscillants d'un transpondeur et de la borne est toujours compris entre 0 et 1, et que la distance qui sépare les antennes des circuits oscillants est, en première approximation, proportionnelle à 1-k. Par conséquent, dans la description qui suit, on fera référence soit à la distance soit au coefficient de couplage.

La présente invention tire son origine d'une interprétation de différentes relations liant les grandeurs électriques mesurables par la borne dans différentes configurations de fonctionnement avec un ou plusieurs transpondeurs.

En particulier, le courant I dans le circuit oscillant série de la borne (par exemple, mesuré par le transformateur 23) est lié à la tension (notée Vg), dite de générateur, excitant le circuit oscillant, et à l'impédance apparente $Z1_{app}$ du circuit oscillant, par la relation suivante :

$$I = \frac{Vg}{Z1_{app}} . \qquad\qquad (formule\ 1)$$

De plus, le fait de réguler la phase du circuit oscillant sur une valeur de référence permet que la variation de distance d'un transpondeur entrant dans le champ de la borne ne se traduise que par une modification de la partie réelle de l'impédance de ce circuit oscillant. En effet, toutes les variations qui auraient tendance à modifier, de façon statique devant les fréquences de modulation, la partie imaginaire, par la charge constituée par le transpondeur (ou les transpondeurs), sont compensées par la boucle de régulation de phase. Ainsi, on s'assure que, en fonctionnement statique, la partie imaginaire de l'impédance $Z1_{app}$ est nulle. Par conséquent, l'impédance $Z1_{app}$ devient égale à la résistance apparente $R1_{app}$ et peut s'exprimer sous la forme :

$$Z1_{app} = R1_{app} = R1 + a^2 \cdot \frac{L2}{R2 \cdot C2}, \qquad\qquad (formule\ 2)$$

avec :

$$a^2 = \frac{k^2 \cdot \omega^2 \cdot L1 \cdot L2}{X2^2 + \left(\frac{L2}{R2 \cdot C2}\right)^2}, \qquad\qquad (formule\ 3)$$

où $\omega$ représente la pulsation, X2 représente la partie imaginaire de l'impédance du circuit oscillant du transpondeur (X2 = $\omega$L2 - 1/$\omega$C2), et où R2 représente la charge constituée par les constituants du transpondeur sur son propre circuit oscillant, modélisée en figure 1 par une résistance R2 représentée en pointillés en parallèle avec l'inductance L2 et le condensateur C2. En d'autres termes, la résistance R2 représente la résistance équivalente de tous les circuits (microprocesseur, moyen de rétromodulation, etc.) du transpondeur, ramenée en parallèle sur le condensateur C2 et l'inductance L2. Dans la formule 2 ci-dessus, on a négligé la résistance série de l'inductance L1 qui s'ajoute aux deux autres termes. On peut également considérer que la valeur de cette résistance série est, par simplification, incluse dans la valeur de la résistance R1.

Les formules 2 et 3 ci-dessus ont été établies dans le cas où un seul transpondeur est présent dans le champ de la borne. Si, à l'inverse, plusieurs transpondeurs sont présents dans ce champ, il convient de sommer leurs participations respectives à l'impédance apparente (plus précisément, à la résistance apparente) côté borne. Par conséquent, pour n transpondeurs présents dans le champ de la borne, on peut écrire :

$$Z1_{app} = R1 + \sum_{i=1}^{n} a_i^2 \cdot \frac{L2_i}{R2_i \cdot C2_i} \cdot \qquad \text{(formule 4)}$$

Si on considère que les transpondeurs sont du même type, c'est-à-dire ont des caractéristiques sensiblement voisines, ce qui constitue une approximation réaliste, la formule 4 ci-dessus devient :

$$Z1_{app} = R1 + \frac{L2}{R2 \cdot C2} \cdot \sum_{i=1}^{n} a_i^2 \cdot \qquad \text{(formule 5)}$$

Le seul terme alors variable est celui qui dépend du couplage entre les circuits oscillants, donc de la distance entre chaque transpondeur et la borne.

Pour n cartes ayant des coefficients de couplage $k_i$ différents, on peut écrire :

$$\sum_{i=1}^{n} a_i^2 = \frac{\omega^2 \cdot L1 \cdot L2}{Z2^2} \cdot \sum_{i=1}^{n} k_i^2 , \qquad \text{(formule 6)}$$

avec :

$$Z2^2 = X2^2 + \left(\frac{L2}{R2 \cdot C2}\right)^2 \cdot \qquad \text{(formule 7)}$$

En première approximation, on peut considérer que, vu de la borne, tout se passe comme si celle-ci voyait n transpondeurs ayant le même coefficient de couplage correspondant à un coefficient de couplage moyen. Par conséquent, on peut arbitrairement définir un coefficient de couplage moyen par carte comme étant donnée par la relation suivante :

$$k_{moy}^2 = \sum_{i=1}^{n} \frac{k_i^2}{n} \cdot \qquad \text{(formule 8)}$$

On notera que cela revient à définir un coefficient $a_{moy}$ par la relation suivante :

$$\sum_{i=1}^{n} a_i^2 = n \cdot a_{moy}^2 \cdot \qquad \text{(formule 9)}$$

On peut donc considérer que, pour n cartes ou transpondeurs présents dans le champ de la borne, le courant I mesuré par son transformateur d'intensité dépend du nombre de cartes et de leurs coefficients de couplage respectifs exprimés en fonction d'un coefficient de couplage moyen de la façon suivante :

$$I = \frac{Vg}{R1 + n \cdot k_{moy}^2 \cdot \frac{\omega^2 \cdot L1 \cdot L2^2}{Z2^2 \cdot R2 \cdot C2}} \cdot \qquad \text{(formule 10)}$$

Intuitivement, on voit bien que si tous les transpondeurs ont le même coefficient de couplage avec la borne, c'est-à-dire s'ils sont tous à la même distance, le courant I diminue avec une augmentation du nombre de transpondeurs présents dans le champ. De façon similaire, pour un même courant mesuré dans le circuit oscillant de la borne, une diminution du coefficient de couplage de chaque transpondeur implique une augmentation du nombre de transpondeurs dans le champ. En d'autres termes, le produit du nombre de transpondeurs par le carré du coefficient de couplage moyen par transpondeur peut être considéré comme constant.

Parmi les mesures de grandeur électriques qui sont aisément réalisables côté borne de lecture-écriture, la présente invention prévoit d'utiliser les valeurs à vide et au couplage maximal qui correspondent aux cas suivants.

Les valeurs à vide représentent le courant et la tension quand aucun transpondeur n'est présent dans le champ de la borne. Dans ce fonctionnement à vide, l'impédance apparente $Z1_{vide}$ du circuit oscillant de la borne ne dépend plus que des composants R1, L1 et C1 de la borne. De plus, comme grâce à la régulation de phase la partie imaginaire de cette impédance est toujours nulle, on peut écrire :

$$I_{vide} = \frac{Vg}{R1} \cdot \qquad \text{(formule 11)}$$

Une autre condition de fonctionnement aisément déterminable correspond au couplage maximal $k_{max}$. Dans cette condition, c'est-à-dire dans une relation de distance minimale entre un transpondeur et la borne (par exemple, le transpondeur étant posé sur la borne le plus près possible de l'antenne L1), la mesure du courant $I_{max}$ dans le circuit oscillant de la borne peut être prise alors qu'un transpondeur de la famille ou type concerné est posé sur la borne.

En considérant que, dans la formule 10 ci-dessus, seules les valeurs Vg, n et $k_{moy}$ sont susceptibles de varier pour une borne donnée et une famille de transpondeurs donnée, et en écrivant cette relation, au couplage maximal, pour une carte et pour n cartes, on peut en déduire :

$$I_{max(n)} = \frac{Vg}{R1 + n \cdot \left(\frac{k_{moy}}{k_{max}}\right)^2 \cdot \left(\frac{Vg}{I_{max(1)}} - R1\right)}, \qquad \text{(formule 12)}$$

avec $I_{max(1)}$ et $I_{max\,(n)}$ représentant les courants au couplage maximal respectivement pour 1 et n cartes.

En combinant les formules 11 et 12, on obtient la relation suivante :

$$I_{max(n)} = \frac{1}{\dfrac{n}{I_{max(1)}} + \dfrac{1 - n}{I_{vide}}} \cdot \qquad \text{(formule 13)}$$

Or, les courants à vide et au couplage maximal pour une carte peuvent être mesurés dans une phase d'apprentissage du lecteur en utilisant une carte échantillon pour le courant au couplage maximal $I_{max(1)}$. Par conséquent, le lecteur est en mesure de calculer les différentes valeurs du courant au couplage maximal pour 2, 3, 4 etc. cartes, le nombre maximal de valeurs calculées étant lié à l'application et au nombre maximal de cartes que l'on estime, dans d'absolu, pouvoir trouver dans le champ du lecteur.

La figure 4 illustre un exemple de réseau de courbes du courant I dans le circuit oscillant de la borne en fonction de la distance d ou, plus précisément, du coefficient de couplage moyen par carte dans le champ du lecteur. L'échelle du couplage moyen est décroissante vers la droite tandis que l'échelle de distance est croissante vers la droite.

Comme l'illustre le réseau de courbes de la figure 4, le courant maximal au couplage maximal $k_{max}$, c'est-à-dire à distance nulle, diminue avec l'augmentation du nombre de cartes dans le champ de la borne. De plus, toutes les courbes ont sensiblement la même allure et rejoignent l'allure horizontale du courant à vide avec l'augmentation de la distance (ou la diminution du coefficient de couplage moyen par carte). On notera que les courbes ne se croisent pas.

Par conséquent, en mesurant, lors du fonctionnement du lecteur, le courant dans son circuit oscillant, on peut déterminer le nombre minimum de cartes dans le champ en comparant ce courant mesuré aux différentes valeurs calculées pendant la phase d'apprentissage. On notera que, par rapport aux courbes de la figure 4, les calculs de la phase d'apprentissage ne conduisent pas à tracer réellement le réseau de courbes mais simplement à calculer les différents courants maximum possibles.

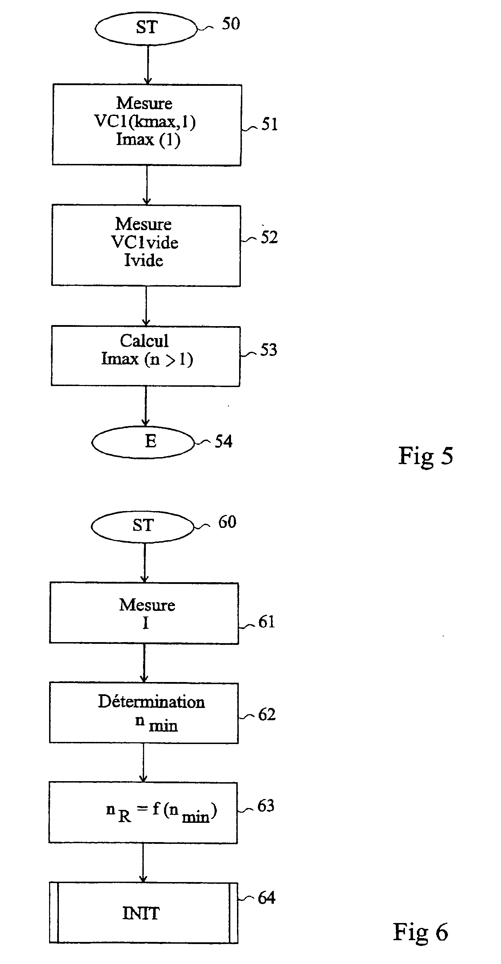

La figure 5 représente un organigramme d'un mode de mise en oeuvre d'une phase d'apprentissage et de préparation selon la présente invention.

Au début (bloc 50, ST), on allume le lecteur et on le configure au moyen de son informatique interne pour une phase d'apprentissage. On mesure la tension VC1 et le courant I au couplage maximal pour une carte (bloc 51). Cette mesure s'effectue en utilisant une carte échantillon que l'on vient placer à distance minimale de la borne, idéalement à distance nulle. Le courant $I_{max(1)}$ est, par exemple, mesuré par un transformateur d'intensité (35, figure 3) tandis que la tension $VC1(k_{max}, 1)$ est mesurée, par exemple, aux bornes du condensateur 31. On notera que, pour la phase d'apprentissage proprement dite illustrée par la figure 5, seule la mesure du courant est nécessaire. Toutefois, pour la mise en oeuvre d'un mode de réalisation préféré de l'invention qui sera décrit ultérieurement, on mesure la tension VC1.

Dans une deuxième étape (bloc 52), on mesure et on mémorise les tension et courant à vide $VC1_{vide}$ et $I_{vide}$. Ces mesures sont effectuées alors qu'aucune carte n'est présente dans le champ de la borne. Bien entendu, l'ordre des mesures entre le fonctionnement à vide et au couplage maximal est arbitraire. Les mesures à vide (qui sont indépendantes de la famille ou type de cartes devant fonctionner avec la borne) pourront même être effectuées indépendamment des mesures au couplage maximal (qui pourront être renouvelées, par exemple, pour changer le type cartes devant fonctionner avec la borne).

A partir des valeurs de courant mesurées aux blocs 51 et 52, les moyens informatiques du lecteur calculent (bloc 53) un ensemble de valeurs de courant correspondant au couplage maximal pour plusieurs cartes. Ces valeurs de $I_{max(n>1)}$ correspondent à celles illustrées par la figure 4, le nombre maximal de valeurs calculées dépendant de l'application.

La phase d'apprentissage est alors terminée (bloc 54, E) et le lecteur est en mesure de déterminer, à chaque fois qu'un ou plusieurs transpondeurs se présenteront dans son champ, le nombre minimal de transpondeurs. Ce nombre permettra d'adapter les procédures d'interrogation et, plus particulièrement, d'adapter le nombre d'étapes d'anti-collision à mettre en oeuvre lors de l'initialisation d'une transmission.

La figure 6 représente un organigramme simplifié d'un premier mode de mise en oeuvre du procédé de détermination du nombre de cartes selon l'invention.

Selon ce mode de réalisation simplifié, après la fin (bloc 54, figure 5) de la phase d'apprentissage, le lecteur passe dans un mode de fonctionnement d'attente classique où il émet des interrogations périodiques pour surveiller l'apparition d'un transpondeur dans son champ.

Dès que le lecteur a détecté la présence éventuelle d'un transpondeur, il entame une phase de détermination telle qu'illustrée par la figure 6. Après une étape (bloc 60, ST) d'initialisation du programme, on mesure (bloc 61) la valeur courante I du courant dans le circuit oscillant du lecteur. Puis, à partir des valeurs calculées précédemment lors de la phase d'apprentissage, on détermine (bloc 62) le nombre minimal $n_{min}$ de transpondeurs présents dans le champ de la borne.

Par exemple, si le courant I mesuré est compris entre le courant à vide $I_{vide}$ et le courant maximal pour une carte $I_{max(1)}$, deux cas sont possibles. Soit on est en présence d'une seule carte dans le champ du lecteur et cette carte a un couplage k donné (inférieur à $k_{max}$). Soit il y a n cartes dans le champ du lecteur qui ont toutes individuellement des couplages k inférieurs au couplage k du premier cas.

Si le courant mesuré se trouve entre deux valeurs de courant maximum pour n et n+1 cartes, on est sûr qu'il y a au minimum n cartes dans le champ du lecteur. Il peut cependant y avoir plus de n+1 cartes si le couplage moyen par carte est inférieur au cas où seules n cartes sont présentes.

On est alors en mesure de choisir (bloc 63) un nombre $n_R$ de cycles d'interrogation dans le procédé d'anti-collision qui est fonction de ce nombre minimal.

A partir de ce nombre, on applique alors un procédé d'anti-collision classique (bloc 64 illustrant l'initialisation INIT d'une transmission).

Un premier avantage qui apparaît déjà avec le mode de réalisation simplifié de l'invention tel que décrit ci-dessus est qu'en connaissant le nombre minimal de cartes, on peut déjà ajuster le nombre de requêtes d'anti-collision et on gagne donc déjà du temps par rapport au procédé classique.

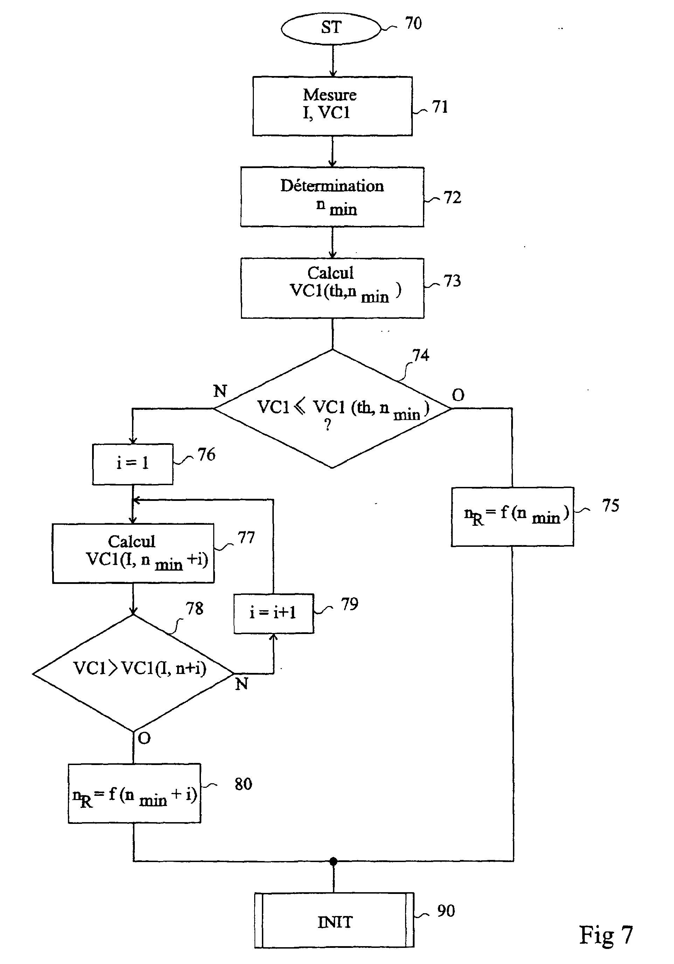

La figure 7 représente un organigramme simplifié d'un mode de réalisation préféré de la présente invention dans lequel la détermination du nombre de phases d'interrogation du procédé d'initialisation d'une transmission est affinée par rapport au mode de réalisation simplifié de la figure 6.

Selon le mode de réalisation préféré de l'invention, après le bloc 70 (ST) de démarrage, on mesure (bloc 71) non seulement le courant I dans le circuit oscillant mais également la tension VC1 aux bornes du condensateur de ce circuit.

On détermine alors (bloc 72) le nombre minimal $n_{min}$ comme dans le procédé simplifié (bloc 62, figure 6).

Selon le mode de réalisation préféré de la figure 7, on calcule alors (bloc 73) un ensemble de valeurs VC1 (th, $n_{min}$) correspondant à un ensemble de valeurs théoriques de tensions aux bornes du condensateur C1 (élément 31, figure 3) pour chacun des nombres minimum des cartes susceptibles d'être présents dans le champ de la borne.

Le calcul de ces valeurs théoriques s'effectue de la façon suivante.

Grâce à la boucle de régulation de phase prévue côté lecteur, on peut calculer, pour chaque nombre minimal de cartes déterminé précédemment, la tension théorique aux bornes de l'élément capacitif du lecteur, puis en déduire le nombre maximal de cartes présentes dans le champ.

En effet, on sait que la partie imaginaire $X1_{app}$ de l'impédance apparente $Z1_{app}$ peut s'exprimer sous la forme :

$$X1_{app} = X1 - a^2 \cdot X2, \qquad \text{(formule 14)}$$

avec :

$$X1 = \omega \cdot L1 - \frac{1}{\omega \cdot C1}. \qquad \text{(formule 15)}$$

Or, grâce à la régulation statique de phase, cette partie imaginaire $X1_{app}$ est nulle. Par conséquent :

$$X1 = a^2 \cdot X2. \qquad \text{(formule 16)}$$

A partir de ces relations, on peut exprimer la différence entre les valeurs courante et à vide de la façon suivante :

$$X1 - X1_{vide} = a^2 \cdot X2 - a_{vide}^2 \cdot X2. \qquad \text{(formule 17)}$$

Or, le coefficient avide est nul dans la mesure où le couplage à vide est nul. De plus, la tension VC1 aux bornes de l'élément 31 (en négligeant l'influence du transformateur d'intensité 35) peut s'écrire I/ωC1, le courant I étant, par exemple, mesuré par le transformateur 35. Il en découle que la formule 17 ci-dessus peut s'écrire :

$$a^2 \cdot X2 = \frac{VC1_{vide}}{I_{vide}} - \frac{VC1}{I}. \qquad \text{(formule 18)}$$

En appliquant la formule 17 à la valeur courante et au couplage maximal, et en reportant ces applications dans la formule 18, on peut écrire, pour une carte :

$$\frac{a^2 \cdot X2}{a_{max}^2 \cdot X2} = \frac{\dfrac{VC1_{vide}}{I_{vide}} - \dfrac{VC1}{I}}{\dfrac{VC1_{vide}}{I_{vide}} - \dfrac{VC1_{max}}{I_{max}}}. \qquad \text{(formule 19)}$$

Or, en appliquant la formule 3 à la formule ci-dessus, on obtient :

$$\frac{a^2 \cdot X2}{a_{max}^2 \cdot X2} = \frac{k^2}{k_{max}^2}. \qquad \text{(formule 20)}$$

Ainsi, le rapport $k/k_{max}$ entre les coefficients de couplage courant et maximal peut s'exprimer, quand un seul transpondeur est présent dans le champ de la borne, sous la forme :

$$\frac{k}{k_{max}} = \sqrt{\frac{\dfrac{VC1}{I} - \dfrac{VC1_{vide}}{I_{vide}}}{\dfrac{VC1_{max}}{I_{max}} - \dfrac{VC1_{vide}}{I_{vide}}}} \quad . \qquad \text{(formule 21)}$$

En appliquant la formule 18 au couplage maximal $k_{max}$ et en exprimant, à partir des formules 1 et 2, la différence entre les impédances apparentes au couplage maximal et à vide, on peut écrire, en ayant combiné les expressions obtenues pour le coefficient $a_{max}^2$ :

$$\frac{X2 \cdot R2 \cdot C2}{L2} = \frac{\dfrac{VC1_{vide}}{I_{vide}} - \dfrac{VC1_{max}}{I_{max}}}{Vg \cdot \left(\dfrac{1}{I_{max}} - \dfrac{1}{I_{vide}}\right)} \quad . \qquad \text{(formule 22)}$$

Or, le rapport $\dfrac{X2 \cdot R2 \cdot C2}{L2}$ est constant et la formule 22 ci-dessus peut s'appliquer à toute valeur du courant I et de la tension VC1 (remplaçant les valeurs au couplage maximal).

Par conséquent, la tension VC1 courante peut s'exprimer sous la forme :

$$VC1 = \left( K2 \cdot \left(\frac{1}{I} - \frac{1}{I_{vide}}\right) + \frac{VC1_{vide}}{I_{vide}} \right) \cdot I, \qquad \text{(formule 23)}$$

où la constante K2 est égale à :

$$K2 = \frac{\dfrac{VC1_{max}}{I_{max}} - \dfrac{VC1_{vide}}{I_{vide}}}{\dfrac{1}{I_{max}} - \dfrac{1}{I_{vide}}} \quad . \qquad \text{(formule 24)}$$

Cette constante peut être calculée et mémorisée lors de la phase d'apprentissage à partir des valeurs mesurées (blocs 51 et 52, figure 5).

L'équation 23 ci-dessus reste valable pour plusieurs cartes présentes dans le champ de la borne. Par conséquent, à partir de la mesure courante du courant (bloc 71, figure 7) et de la détermination du nombre minimal de cartes $n_{min}$ (bloc 72), on peut déduire une valeur théorique $VC1_{(th,nmin)}$ de la tension VC1 aux bornes de l'élément capacitif 31 pour $n_{min}$ cartes, en appliquant la relation suivante qui se déduit de la formule 23 :

$$VC1_{(th,n_{min})} = \left( K2 \cdot \left(\frac{1}{I} - \frac{1}{I_{vide}}\right) + \frac{VC1_{vide}}{I_{vide}} \right) \cdot I. \qquad \text{(formule 25)}$$

On est alors en mesure de comparer (bloc 74, figure 7) la valeur courante de la tension mesurée aux bornes de l'élément 31 à cette valeur théorique calculée pour la zone minimale déterminée précédemment.

Si la tension mesurée est inférieure ou égale à la valeur théorique calculée pour le nombre $n_{min}$, cela signifie que le nombre de cartes présentes dans le champ est égal au nombre minimal. Dans ce cas, on choisit (bloc 75) le nombre $n_R$ de séquences d'interrogation du procédé d'anti-collision à partir de ce nombre $n_{min}$ dont on sait qu'il correspond désormais au nombre exact de transpondeurs.

Si la valeur mesurée est supérieure à la valeur théorique, cela signifie qu'il y a plus de $n_{min}$ cartes dans le champ de la borne.

On passe alors à une autre phase de calculs qui consiste à déterminer, à partir de la mesure de tension, le nombre maximal de cartes présentes dans le champ. Pour cela, on effectue, de façon itérative, le calcul de la tension VC1 qui devrait être obtenue pour correspondre au courant I mesuré pour un nombre de cartes $n_{min}+i$ de plus en plus grand. En effet, comme on a pu déterminer le nombre minimal de cartes à partir de la mesure du courant, et que l'on sait que le nombre réel de cartes ne correspond pas à ce nombre minimal, le nombre de cartes dans le champ de la borne est supérieur au nombre minimal mais le coefficient de couplage moyen de ces cartes est inférieur au coefficient de couplage maximal. Dans le cas contraire, le courant mesuré aurait fourni un nombre minimal de cartes supérieur.

Comme l'illustre l'exemple de réalisation de la figure 7, on initialise (bloc 76) un compteur qui représente l'incrément i supplémentaire par rapport au nombre $n_{min}$ de cartes. En ayant fixé la variable i à 1, on calcule une première valeur de tension VC1 pour le courant I mesuré et le nombre minimal de cartes +1. La relation appliquée pour le calcul de cette valeur (bloc 77) est obtenue de la façon suivante qui sera mieux comprise en relation avec la figure 8.

La figure 8 représente un exemple d'allures du courant I dans le circuit oscillant en fonction de la distance (ou du coefficient k de couplage) associé à une échelle de valeur de la tension VC1 aux bornes de l'élément capacitif 31.

Comme l'illustre cette figure, les calculs (bloc 53, figure 5) effectués lors de la phase d'apprentissage permettent de déterminer des points d'origine de courbes 81, 82, 83 et 84 qui sont tous situés au coefficient de couplage maximal $k_{max}$. Chaque courbe correspond à un nombre croissant de cartes pour un courant décroissant. La mesure (bloc 52) du courant à vide définit l'asymptote des différentes courbes. Le tracé des courants de la figure 8 est à rapprocher du tracé de la figure 4. La détermination des différents points sur l'axe des courants à la position des coefficients de couplage maximal ou de distance nulle permet de déterminer des zones (horizontales dans la représentation de la figure) où le nombre de cartes minimal est différent d'une zone à l'autre. La mesure de la tension VC1 permet, par la suite, de déterminer le nombre maximum de cartes.

Le calcul (bloc 73) de la valeur théorique de la tension, pour le nombre minimal de cartes obtenues à la valeur I du courant mesuré, détermine un point d'intersection qui, dans l'exemple représenté à la figure 8, est sur la courbe 82 représentant l'allure de deux cartes.

Le calcul opéré au bloc 77 de la figure 7 correspond à déterminer les points d'intersection de la ligne du courant I mesuré avec les courbes 83 et 84 correspondant à des nombres de cartes supérieurs.

Après avoir calculé une première valeur VC1(I,3) pour un incrément i unitaire, on compare la valeur obtenue à la valeur VC1 mesurée (bloc 78). Tant que la valeur VC1 mesurée n'est pas supérieure à la valeur calculée, on augmente l'incrément i (bloc 79) et on refait le calcul pour un nombre de cartes supérieur (valeur VC1(I,4)). Dans l'exemple de la figure 8, on suppose que la valeur VC1 mesurée est comprise entre les valeurs pour trois et quatre cartes. En tenant compte du courant mesuré, cela signifie que le nombre de transpondeurs est au maximum de quatre, donc compris entre 2 et 4. On est alors en mesure de fixer (bloc 80) le nombre de requêtes d'interrogation du processus d'anti-collision à ce nombre maximal (ou au nombre maximal +1 pour des questions de sécurité de détermination).

Par suite, que le nombre de requêtes ait été fixé par le bloc 75 ou par le bloc 80, on effectue un processus d'interrogation classique tenant compte de ce nombre (bloc 90).

On notera que, si la représentation de la figure 8 illustre des courbes théoriques complètes, les calculs nécessaires à la mise en oeuvre de l'invention ne concernent que des points de ces courbes qui, en pratique, n'ont pas besoin d'être déterminés de façon précise.

Le calcul de la valeur VC1(I, $n_{min}+i$) s'effectue à partir de la formule suivante :

$$VC1(I, n_{min}+i) = \left( \frac{n_{min}+i}{n_{min}} \cdot \left( \frac{VC1(th, n_{min})}{I} - \frac{VC1_{vide}}{I_{vide}} \right) + \frac{VC1_{vide}}{I_{vide}} \right) I, \quad \text{(formule 26)}$$

qui se déduit de l'application de la formule 21 à un coefficient de couplage moyen par carte dans la zone du nombre minimum, en considérant que, pour un courant mesuré donné, le coefficient de couplage moyen est donné par la relation suivante :

$$k^2_{(I,n+i)} = \frac{n_{min} + i}{n_{min}} \cdot k^2_{(I,th,n_{min})}, \qquad \text{(formule 27)}$$

où $k_{(I,th,nmin)}$ désigne le coefficient de couplage moyen par carte correspondant à la valeur $n_{min}$.

Un avantage de la présente invention est qu'il est désormais possible de déterminer au moins le nombre minimal de transpondeurs présents dans le champ.

Dans le mode de réalisation préféré illustré ci-dessus, on détermine même le nombre exact ou, à tout le moins, un nombre maximum de transpondeurs présents dans le champ. La connaissance de ces nombres permet d'adapter les algorithmes d'initialisation d'une communication lorsque au moins un transpondeur répond à une requête d'interrogation émise par une borne.

Le fait de connaître a priori le nombre de cartes dans le champ du lecteur permet d'évaluer le nombre optimal de phases d'interrogation. On peut ainsi réduire jusqu'à optimisation le temps d'échange consacré au protocole d'anti-collision qui doit permettre, soit de sélectionner une carte parmi plusieurs présentées en même temps devant le lecteur, soit d'identifier les cartes dans le champ du lecteur, soit d'autoriser un séquencement de sélection des différentes cartes avec lesquelles le lecteur doit communiquer.

L'adaptation du nombre prévisible de cartes dans le champ du lecteur s'effectue, selon l'invention, dès qu'un transpondeur répond à une requête d'interrogation par la borne. Initialement, on peut prévoir de fixer ce nombre de façon arbitraire ou de façon classique si un nombre prédéterminé est nécessaire pour la mise en oeuvre du procédé d'interrogation.

Dès que le lecteur détecte la présence d'un transpondeur, il effectue la procédure de détermination du nombre de transpondeurs en utilisant les données calculées lors de l'apprentissage. Par la mise en oeuvre de l'invention, il n'est désormais plus nécessaire de prévoir une adaptation dynamique de ce nombre de requêtes à l'extérieur de la fourchette du nombre minimal et du nombre maximal déterminés par le procédé de l'invention. Pour le reste, on peut recourir à un procédé d'interrogation, d'anti-collision et d'initialisation classiques.

On notera que le nombre $n_R$ de requêtes ne correspond pas nécessairement au nombre maximal ou exact déterminé par l'invention, mais est fonction de ce nombre (par exemple, produit ou quotient par un coefficient prédéterminé, somme ou soustraction d'un nombre prédéterminé).

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellites, etc.) de cartes à puce sans contact (par exemple les cartes d'identification pour contrôle d'accès, les cartes porte-monnaie électroniques, les cartes de stockage d'informations sur le possesseur de la carte, les cartes de fidélité de consommateurs, les cartes de télévision à péage, etc.).

## Revendications

**1.** Borne de génération d'un champ électromagnétique haute fréquence au moyen d'un circuit oscillant (R1, L1, 31), propre à coopérer avec au moins un transpondeur lorsque ce dernier entre dans ce champ, comportant :

des moyens (37) de régulation de la phase du signal dans le circuit oscillant par rapport à une valeur de référence ; et **caractérisée en ce qu'**elle comporte :
des moyens pour évaluer, à partir d'une mesure du courant dans le circuit oscillant, le nombre minimal de transpondeurs présents dans le champ.

**2.** Borne selon la revendication 1, **caractérisée en ce qu'**elle comporte en outre des moyens pour, à partir d'une mesure de la tension aux bornes d'un élément capacitif (31) du circuit oscillant, évaluer le nombre maximal de transpondeurs présents dans le champ de la borne.

**3.** Borne selon la revendication 1 ou 2, **caractérisée en ce qu'**elle comporte des moyens pour déterminer et mémoriser des informations caractéristiques relatives aux tensions aux bornes de l'élément capacitif (31) de son circuit oscillant et aux courants dans ce circuit oscillant, dans plusieurs configurations déterminées de distance séparant un ou plusieurs transpondeurs de la borne, et pour tenir compte de ces informations caractéristiques dans l'évaluation du nombre de transpondeurs.

**4.** Borne selon la revendication 3, **caractérisée en ce que** lesdites informations caractéristiques comprennent, entre autres :

la tension aux bornes de l'élément capacitif (31) lorsque aucun transpondeur (10) n'est présent dans le champ de la borne (1) ;

la tension aux bornes de l'élément capacitif lorsqu'un transpondeur est dans une relation de proximité maximale ($k_{max}$) avec la borne ;

le courant dans le circuit oscillant quand aucun transpondeur n'est présent dans le champ de la borne ; et

le courant dans le circuit oscillant quand un transpondeur est dans une relation de proximité maximale avec la borne.

**5.** Borne selon l'une quelconque des revendications 1 à 4, **caractérisée en ce que** l'évaluation du nombre de cartes s'effectue sans interpréter de messages de données éventuels véhiculés par le champ haute fréquence.

**6.** Procédé d'établissement d'au moins une communication entre une borne (1) de génération d'un champ magnétique haute fréquence et un transpondeur électromagnétique (10), consistant à envoyer périodiquement une séquence d'interrogation (REQ) jusqu'à ce qu'au moins un transpondeur entrant dans le champ réponde, **caractérisé en ce qu'**il consiste à évaluer, à partir d'une mesure du courant dans un circuit oscillant de la borne, un nombre minimal de transpondeurs susceptibles d'être présents dans le champ.

**7.** Procédé selon la revendication 6, **caractérisé en ce** ladite évaluation consiste à comparer le courant mesuré à des valeurs précédemment calculées et mémorisées et correspondant à des évaluations du courant maximal pour plusieurs nombres minimum de transpondeurs.

**8.** Procédé selon la revendication 6 ou 7, **caractérisé en ce qu'**il consiste en outre, à partir de l'évaluation du nombre minimal et d'une mesure de la tension courante aux bornes d'un élément capacitif (31) du circuit oscillant, à évaluer un nombre maximum de transpondeurs susceptibles d'être présents dans le champ de la borne.

**9.** Procédé selon l'une quelconque des revendications 6 à 8, **caractérisé en ce qu'**il est appliqué à une borne conforme à l'une quelconque des revendications 1 à 5.

## Claims

**1.** A terminal for generating a high-frequency electromagnetic field by means of an oscillating circuit (R1, L1, 31), adapted to cooperating with at least one transponder when said transponder enters this field, comprising:

means (37) for regulating the signal phase in the oscillating circuit with respect to a reference value; and

**characterized in that** it further comprises:

means for evaluating, based on a measurement of the current in the oscillating circuit, the minimum number of transponders present in the field.

**2.** The terminal of claim 1, **characterized in that** it further includes means for, based on a measurement of the voltage across a capacitive element (31) of the oscillating circuit, evaluating the maximum number of transponders present in the terminal's field.

**3.** The terminal of claim 1 or 2, **characterized in that** it includes means for determining and storing characteristic information relative to the voltages across the capacitive element (31) of its oscillating circuit and to the currents in this oscillating circuit, in several determined configurations of the distance separating one or several transponders from the terminal, and for taking these characteristic information into account in evaluating the number of transponders.

**4.** The terminal of claim 3, **characterized in that** said characteristic information includes, among others:

the voltage across the capacitive element (31) when no transponder (10) is present in the field of the terminal (1);
the voltage across the capacitive element when a transponder is in a relation of maximum closeness ($k_{max}$) with the terminal;
the current in the oscillating circuit when no transponder is present in the terminal's field; and
the current in the oscillating circuit when a transponder is in a relation of maximum closeness with the terminal.

**5.** The terminal of any of claims 1 to 4, **characterized in that** the evaluation of the number of cards is performed without interpreting possible data messages carried by the high-frequency field.

**6.** A method for establishing at least one communication between a terminal (1) generating a high-frequency magnetic field and an electromagnetic transponder (10), consisting of periodically sending a request sequence (REQ) until at least one transponder entering the field sends an acknowledgement, **characterized in that** it consists in evaluating, based on a measurement of the current in an oscillating circuit of the terminal, a minimum number of transponders likely to be present in the field.

**7.** The method of claim 6, **characterized in that** said evaluation consists of comparing the measured current with previously calculated and stored values corresponding to evaluations of the maximum current for several minimum numbers of transponders.

**8.** The method of claim 6 or 7, **characterized in that** it further consists, based on the evaluation of the minimum number and on a measurement of the present voltage across a capacitive element (31) of the oscillating circuit, of evaluating a maximum number of transponders likely to be present in the terminal's field.

**9.** The method of any of claims 6 to 8, applied to the terminal of any of claims 1 to 5.

**Patentansprüche**

**1.** Ein Anschluss bzw. Terminal zum Erzeugen eines hochfrequenten elektromagnetischen Feldes mittels einer oszillierenden Schaltung (R1, L1, 31), die in der Lage ist, mit wenigstens einem Transponder zu kooperieren, wenn der Transponder in dieses Feld eintritt, der Folgendes aufweist:

Mittel (37) zum Regulieren der Signalphase in der oszillierenden Schaltung bezüglich eines Referenzwertes; und **dadurch gekennzeichnet, dass** er ferner Folgendes aufweist:

Mittel zum Evaluieren basierend auf einer Messung des Stroms in der oszillierenden Schaltung der minimalen Anzahl von Transpondern, die in dem Feld vorhanden sind.

**2.** Anschluss nach Anspruch 1, **dadurch gekennzeichnet, dass** er ferner Mittel umfasst zum Evaluieren der maximalen Anzahl von Transpondern, die in dem Feld des Anschlusses vorhanden sind, und zwar basierend auf einer Messung der Spannung über ein kapazitives Element (31) der oszillierenden Schaltung,

**3.** Anschluss nach Anspruch 1 oder 2, **dadurch gekennzeichnet, dass** er Mittel umfasst zum Bestimmen und Speichern von charakteristischer Information hinsichtlich der Spannung über dem kapazitiven Element (31), seiner oszillierenden Schaltung und hinsichtlich der Ströme in dieser oszillierenden Schaltung in mehreren bestimmten Konfigurationen des Abstands der einen oder mehrere Transponder von dem Anschluss trennt, und zum im Betracht Ziehen dieser charakteristischen Information beim Evaluieren der Anzahl von Transpondern.

**4.** Anschluss nach Anspruch 3, **dadurch gekennzeichnet, dass** die charakteristische Information unter anderem Folgendes umfasst:

Die Spannung über dem kapazitiven Element (31), wenn kein Transponder (10) in dem Feld des Anschlusses 1 vorhanden ist; die Spannung über dem kapazitiven Element, wenn ein Transponder in einer Beziehung maximaler Nähe ($k_{max}$) mit dem Anschluss vorgesehen ist;
der Strom in der oszillierenden Schaltung, wenn kein Transponder in dem Feld des Anschlusses vorhanden ist; und
den Strom in der oszillierenden Schaltung, wenn ein Transponder in einer Beziehung maximaler Nähe zu dem Anschluss vorhanden ist.

**5.** Anschluss nach einem der Ansprüche 1 bis 4, **dadurch gekennzeichnet, dass** die Evaluierung, der Anzahl von Karten durchgeführt wird, ohne Interpretieren möglicher Datennachrichten, die durch das Hochfrequenzfeld getragen bzw übertragen werden

**6.** Verfahren zum Aufbauen wenigstens einer Kommunikation zwischen einem Anschluss 1, der ein hochfrequentes

EP 1 154 368 B1

Magnetfeld erzeugt und einem elektromagnetischen Transponder (10) bestehend aus dem periodischen Aussenden einer Anforderungssequenz (REQ) bis wenigstens ein Transponder, der in das Feld eintritt, eine Bestätigung aussendet, **dadurch gekennzeichnet, dass** das Verfahren aus dem Auswerten, basierend auf einer Messung des Stroms in einer oszillierenden Schaltung des Anschlusses einer minimalen Anzahl von Transpondern, die wahrscheinlich in dem Feld vorhanden ist, besteht.

7. Verfahren nach Anspruch 6, **dadurch gekennzeichnet, dass** die Evaluierung besteht aus einem Vergleich des gemessenen Stroms mit zuvor berechneten und gespeicherten Werten, die Evaluierung des maximalen Stroms für mehrere minimale Anzahlen von Transpondern entsprechen.

8. Verfahren nach Anspruch 6 oder 7, **dadurch gekennzeichnet, dass** es ferner basierend auf der Evaluierung der minimalen Anzahl und auf einer Messung der derzeitigen Spannung über einem kapazitiven Element (31) der oszillierenden Schaltung das Evaluieren einer maximalen Anzahl von Transpondern aufweist, die wahrscheinlich in dem Feld des Anschlusses vorhanden ist

9. Verfahren nach einem der Ansprüche 6 bis 8, das bei einem Anschluss gemäß einem der Ansprüche 1 bis 5 verwendet wird

Fig 1

Fig 2

Fig 3

Fig 4

Fig 5

Fig 6

Fig 7

Fig 8